# EUROPEAN PATENT APPLICATION

(11) **EP 2 442 235 A1**
(43) Date of publication of application: **18.04.2012**
(21) Application number: 09845687.4
(22) Date of filing: 10.06.2009
(51) Int. Cl.: G06F 17/30, H04W 4/00, H04L 29/08

(54) **METHOD ADAPTING TO MOBILE SEARCH INTERFACE, SEARCH SERVER AND SYSTEM THEREOF**

(71) Applicant: Huawei Technologies Co., Ltd., Longgang District, Shenzhen Guangdong 518129 (CN)
(72) Inventor: HU, Hanqiang, Shenzhen Guangdong 518129 (CN); ZHANG, Fei, Shenzhen Guangdong 518129 (CN); WANG, Wei, Shenzhen Guangdong 518129 (CN); DONG, Xiaoyi, Shenzhen Guangdong 518129 (CN); GU, Chong, Shenzhen Guangdong 518129 (CN)
(74) Representative: Charles, Glyndwr
(86) International application number: PCT/CN2009/072204
(87) International publication number: WO 2010/142078

(57) **Abstract**

A method, a search server, and a system for mobile search interface adaptation are provided. The method for query interface adaptation for mobile search includes: receiving a search request represented by a global query interface schema; according to a mapping relationship between an attribute in the global query interface schema and an attribute in a local query interface schema of each member engine, converting the search request represented by the global query interface schema into a search request represented by the local query interface schema of each member engine; and distributing the search request represented by the local query interface schema of each member engine to each member search engine. Therefore, efficiency and accuracy of mobile search are greatly improved.

## Description

### FIELD OF THE INVENTION

The present invention relates to the field of mobile search, and in particular, to a method, a search server, and a system for mobile search interface adaptation.

### BACKGROUND OF THE INVENTION

In the year 2004, some domestic value-added service providers started providing mobile search services, which marks the launch of the domestic mobile search market. In the year 2006, a domestic large telecommunication company started cooperation of mobile search services with a foreign company, and the development of the domestic mobile search market further accelerates. At the same time, the global mobile search industry also started to play a more important role in the mobile value-added services. In the year 2006, 4% of global mobile users use the mobile search services, and the industry reaches a scale of 4 billion US dollars. It is predicted that in the year 2010, the global mobile search industry will reach a scale of 11 billion US dollars. Therefore, as a combination of two hot fields in the current information industry including the search engine and the mobile communication, the mobile search already becomes a new highlight and growth point of the mobile value-added service.

During the implementation of the present invention, the inventors find that the prior art at least have the following problems. In the prior art, a mobile search system includes a search client, a search server, and a member engine. The characteristic thereof is to perform analysis, translation, and integration according to semantic relationships between interface schemas (syntax structures). However, the process of analyzing the semantic relationships between the interface schemas in the prior art is too complicated, the implementation thereof is difficult, the efficiency is low, and the accuracy rate can only reach about 85% (the probability of the adaptation errors is 15%).

### SUMMARY OF THE INVENTION

The present invention is directed to a method, a search server, and a system for mobile search interface adaptation, so as to improve efficiency and accuracy of the mobile search.

In an aspect, an embodiment of the present invention provides a method for query interface adaptation for mobile search, where the method includes: receiving a search request represented by a global query interface schema; according to a mapping relationship between an attribute in the global query interface schema and an attribute in a local query interface schema of each member engine, converting the search request represented by the global query interface schema into a search request represented by the local query interface schema of each member engine; and distributing the search request represented by the local query interface schema of each member engine to each member search engine.

In another aspect, an embodiment of the present invention provides a method for search result interface adaptation for mobile search, where the method includes: receiving a search result sent by each member engine, where the search result is represented by a local search result interface schema of each member engine; according to a mapping relationship between an attribute in a global search result interface schema and an attribute in the local search result interface schema of each member engine, converting and combining the search result represented by the local search result interface schema of each member engine into a search result represented by the global search result interface schema; and returning the search result represented by the global search result interface schema to a client sending a search request or another search server.

In yet another aspect, an embodiment of the present invention provides a search server for query interface adaptation for mobile search, where the search server includes: a receiving unit, configured to receive a search request represented by a global query interface schema; a conversion unit, configured to, according to a mapping relationship between an attribute in the global query interface schema and an attribute in a local query interface schema of each member engine, convert the search request represented by the global query interface schema into a search request represented by the local query interface schema of each member engine; and a sending unit, configured to distribute the search request represented by the local query interface schema of each member engine to each member search engine.

In yet another aspect, an embodiment of the present invention provides a system for query interface adaptation for mobile search, where the system includes a member engine and the search server for query interface adaptation for mobile search.

In yet another aspect, an embodiment of the present invention provides a search server for search result interface adaptation for mobile search, where the search server includes: a receiving unit, configured to receive a search result sent by each member engine, where the search result is represented by a local search result interface schema of each member engine; a conversion unit, configured to, according to a mapping relationship between an attribute in a global search result interface schema and an attribute in the local search result interface schema of each member engine, convert and combine the search result represented by the local search result interface schema of each member engine into a search result represented by the global search result interface schema; and a sending unit, configured to return the search result represented by the global search result interface schema to a client sending a search request or another search server.

In further another aspect, an embodiment of the present invention provides a system for search result interface adaptation for mobile search, where the system includes a member engine and the search server for search result interface adaptation for mobile search.

The embodiments of the present invention have the following beneficial effect that the process of the search interface adaptation of the search server is greatly simplified.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

FIG. 1 is a flow chart of a method for query interface adaptation for mobile search according to an embodiment of the present invention;

FIG. 2 is a flow chart of a method for search result interface adaptation for mobile search according to an embodiment of the present invention;

FIG. 3 is a schematic structure diagram of a search server for query interface adaptation for mobile search according to an embodiment of the present invention;

FIG. 4 is a schematic structure diagram of a search server for search result interface adaptation for mobile search according to an embodiment of the present invention;

FIG. 5 is a schematic structure diagram of a system for query and search result interface adaptation for mobile search according to an embodiment of the present invention;

FIG. 6 is a schematic structure diagram of detailed module devices for query and search result interfaces adaptation for mobile search according to an embodiment of the present invention;

FIG. 7 is a schematic diagram of registration for mobile search in an application example of the present invention;

FIG. 8 is a schematic diagram of query interface adaptation for mobile search in an application example of the present invention;

FIG. 9 is a schematic diagram of search result interface adaptation for mobile search in an application example of the present invention;

FIG. 10 is a schematic diagram of registration for mobile search in another application example of the present invention;

FIG. 11 is a schematic diagram of query interface adaptation for mobile search in another application example of the present invention; and

FIG. 12 is a schematic diagram of search result interface adaptation for mobile search in another application example of the present invention.

### DETAILED DESCRIPTION OF THE EMBODIMENTS

The technical solution of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

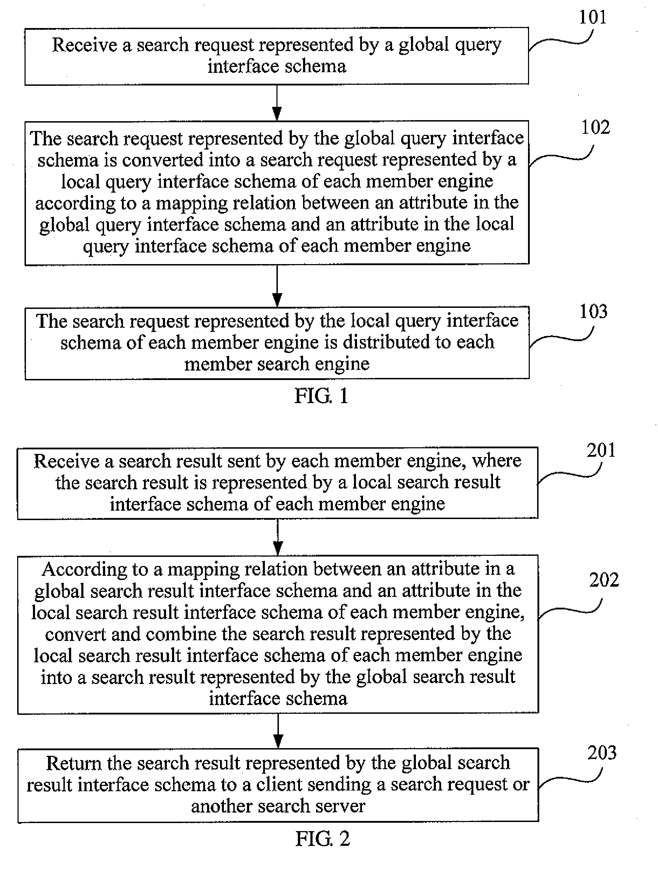

FIG. 1 is a flow chart of a method for query interface adaptation for mobile search according to an embodiment of the present invention, where the method is applicable to a search server, and includes the following steps.

Step 101: Receive a search request represented by a global query interface schema.

Preferably, before the search request sent by a client is received, the method may include receiving a local query interface schema of each member engine sent by each member engine. In the embodiments of the present invention, the schema is used for describing a syntax structure of parameters/attributes of an interface, including: parameters/attributes, names of the parameters/attributes, types (such as an integer type, a character type, and an enumeration type) of the parameters/attributes, simple description of the parameters/attributes, number ranges of numeric parameters/attributes, all enumeration values of enumerated parameters/attributes, labels of the parameters/attributes, and limiting conditions of the parameters/attributes (such as mandatory parameters and optional parameters).

Step 102: The search request represented by the global query interface schema is converted into a search request represented by the local query interface schema of each member engine according to a mapping relationship between an attribute in the global query interface schema and an attribute in the local query interface schema of each member engine.

Preferably, the mapping relationship between the attribute in the global query interface schema and the attribute in the local query interface schema of each member engine may be reported by each member engine or generated by the search server according to the global query interface schema and the local query interface schema of each member engine. Preferably, the converting the search request represented by the global query interface schema into the search request represented by the local query interface schema of each member engine according to the mapping relationship between the attribute in the global query interface schema and the attribute in the local query interface schema of each member engine includes: when an attribute in a certain corresponding local query interface schema is not found to be mapped to the attribute in the search request represented by the global query interface schema, expanding an input keyword corresponding to the attribute in the search request represented by the global query interface schema into a generic attribute in the local query interface schema.

Step 103: The search request represented by the local query interface schema of each member engine is distributed to each member search engine.

Preferably, the member engine may include a vertical search engine and/or a search server connected to a next-level member engine.

The method for query interface adaptation for mobile search in this embodiment of the present invention greatly simplifies the process of the query interface adaptation of the search server, so efficiency and accuracy of the search are improved.

FIG. 2 is a flow chart of a method for search result interface adaptation for mobile search according to an embodiment of the present invention, where the method is applicable after a search server distributes a search request, and includes the following steps.

Step 201: Receive a search result sent by each member engine, where the search result is represented by a local search result interface schema of each member engine.

Preferably, before the search result sent by each member engine is received, the method may include receiving a local search result interface schema of each member engine sent by each member engine.

Step 202: According to a mapping relationship between an attribute in a global search result interface schema and an attribute in the local search result interface schema of each member engine, the search result represented by the local search result interface schema of each member engine is converted and combined into a search result represented by the global search result interface schema.

Preferably, the mapping relationship between the attribute in the global search result interface schema and the attribute in the local search result interface schema of each member engine may be reported by each member engine or generated by the search server according to the global search result interface schema and the local search result interface schema of each member engine. The converting and combining the search result represented by the local search result interface schema of each member engine into the search result represented by the global search result interface schema according to the mapping relationship between the attribute in the global search result interface schema and the attribute in the local search result interface schema of each member engine includes: according to the global search result interface schema, the local search result interface schema of each member engine, and the mapping relationship between the attribute in the global search result interface schema and the attribute in the local search result interface schema of each member engine, converting and combining the search result represented by the local search result interface schema of each member engine into the search result represented by the global search result interface schema.

Step 203: Return the search result represented by the global search result interface schema to a client sending a search request or another search server.

Preferably, the member engine may include a vertical search engine and/or a search server connected to a next-level member engine.

The method for search result interface adaptation for mobile search in this embodiment of the present invention greatly simplifies the process of the search result interface adaptation of the search server, so efficiency and accuracy of the search result integration are improved.

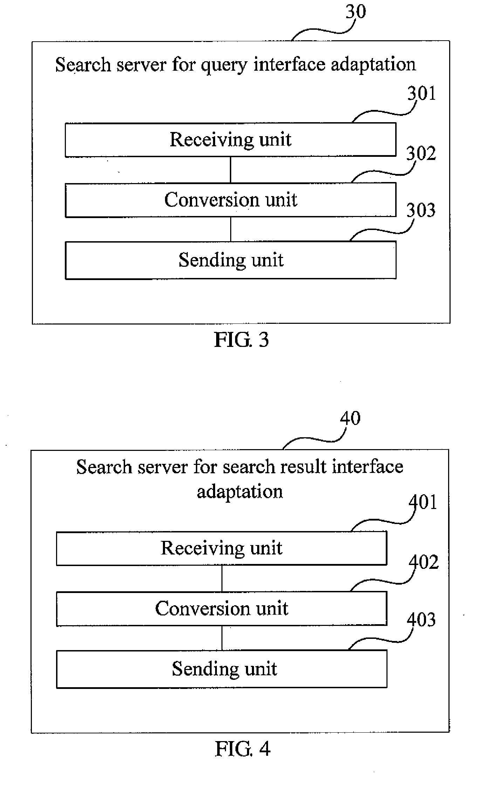

FIG. 3 is a schematic structure diagram of a search server for query interface adaptation for mobile search according to an embodiment of the present invention. The search server 30 includes: a receiving unit 301, configured to receive a search request represented by a global query interface schema; a conversion unit 302, configured to convert the search request represented by the global query interface schema into a search request represented by a local query interface schema of each member engine according to a mapping relationship between an attribute in the global query interface schema and an attribute in the local query interface schema of each member engine; and a sending unit 303, configured to distribute the search request represented by the local query interface schema of each member engine to each member search engine.

Preferably, before receiving the search request sent by a client, the receiving unit 301 is configured to receive the local query interface schema of each member engine sent by each member engine. Preferably, the mapping relationship between the attribute in the global query interface schema and the attribute in the local query interface schema of each member engine may be reported by each member engine or generated by the search server according to the global query interface schema and the local query interface schema of each member engine. Preferably, the conversion unit 302 is further configured to convert the search request represented by the global query interface schema into the search request represented by the local query interface schema of each member engine according to the global query interface schema, the local query interface schema of each member engine, and the mapping relationship between the attribute in the global query interface schema and the attribute in the local query interface schema of each member engine. When an attribute in a certain corresponding local query interface schema is not found to be mapped to the attribute in the search request represented by the global query interface schema, the conversion 302 expands an input keyword corresponding to the attribute in the search request represented by the global query interface schema into a generic attribute in the local query interface schema. Preferably, the member engine may include a vertical search engine and/or a search server connected to a next-level member engine.

An embodiment of the present invention further provides a system for query interface adaptation for mobile search, where the system includes a member engine and the search server for query interface adaptation for mobile search.

The search server and the system for query interface adaptation for mobile search in this embodiment of the present invention greatly simplify the process of the query interface adaptation of the search server, so efficiency and accuracy of the search are improved.

FIG. 4 is a schematic structure diagram of a search server for search result interface adaptation for mobile search according to an embodiment of the present invention. The search server 40 includes: a receiving unit 401, configured to receive a search result sent by each member engine, where the search result is represented by a local search result interface schema of each member engine; a conversion unit 402, configured to, according to a mapping relationship between an attribute in a global search result interface schema and an attribute in the local search result interface schema of each member engine, convert and combine the search result represented by the local search result interface schema of each member engine into a search result represented by the global search result interface schema; and a sending unit 403, configured to return the search result represented by the global search result interface schema to a client sending a search request or another search server.

Preferably, before the receiving the search request sent by the client, the receiving unit 401 may be configured to receive the local search result interface schema of each member engine sent by each member engine. Preferably, the mapping relationship between the attribute in the global search result interface schema and the attribute in the local search result interface schema of each member engine is reported by each member engine or generated by the search server according to the global search result interface schema and the local search result interface schema of each member engine. Preferably, the member engine includes a vertical search engine and/or a search server connected to a next-level member engine. The conversion unit 402 is further configured to, according to the global search result interface schema, the local search result interface schema of each member engine, and the mapping relationship between the attribute in the global search result interface schema and the attribute in the local search result interface schema of each member engine, convert and combine the search result represented by the local search result interface schema of each member engine into the search result represented by the global search result interface schema.

An embodiment of the present invention provides a system for search result interface adaptation for mobile search, where the system includes a member engine and the search server for search result interface adaptation for mobile search.

The search server and the system for search result interface adaptation for mobile search in the embodiment of the present invention greatly simplify the process of the search result interface adaptation of the search server, so efficiency and accuracy of the search result integration are improved.

The method for query and search result interfaces adaptation for mobile search in the embodiment of the present invention includes the following steps. A member engine uploads a mapping relationship between an attribute in a local interface schema and an attribute in a global interface schema during registration. During query interface adaptation, a search request in the form of the global interface schema is converted into a search request in the form of the local interface schema by adopting the mapping relationship. Also, when the search result is returned, the search result in the form of the local interface schema is converted into the search result in the form of the global interface schema by adopting the mapping relationship.

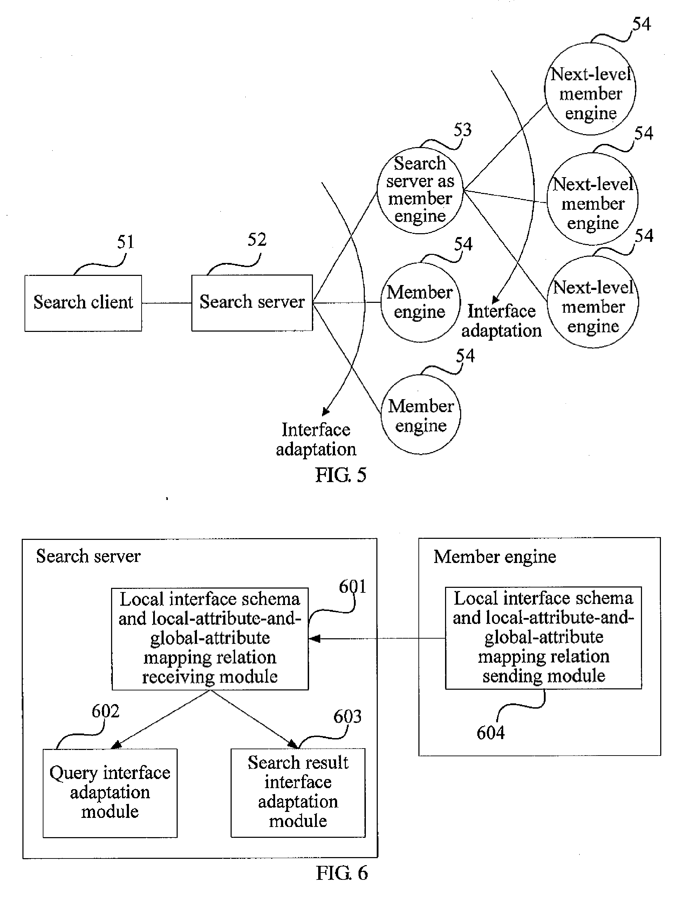

FIG. 5 is a schematic structure diagram of a system for query and search result interface adaptation for mobile search according to an embodiment of the present invention. The system includes a search client (which may also be referred to as a client for short) 51, a search server 52, and a member engine 53\54.

The search client 51 is configured to send a search request to the search server 52.

The search server 52 is configured to receive and store local query and search result interface schemas and a mapping relationship between an attribute in a global interface schema and an attribute in a local interface schema reported by the member engine 54, where alternatively, the mapping relationship between the attribute in the global interface schema and the attribute in the local interface schema is generated and stored by the search server 52; or receive and store global query and search result interface schemas of the other search server 53 and a mapping relationship between the attribute in the global interface schema of the search server 52 and an attribute in a global interface schema of the another search server 53 reported by the another search server 53, where alternatively, the mapping relationship between the attribute in the global interface schema of the search server 52 and the attribute in the global interface schema of the another search server 53 is generated and stored by the search server 52.

Next, according to the global query interface schema, the local query interface schema, and the mapping relationship between the attribute in the global query interface schema and the attribute in each local query interface schema, the search request represented in the form of the global query interface schema sent by the search client 51 is converted into a search request represented by the local query interface schema of each member engine 53\54 and the search request represented by the local query interface schema of each member engine 53\54 is sent to each member engine 53\54, or according to the global query interface schema of the search server 52, the global query interface schema of the other search server 53, and the mapping relationship between the attribute in the global query interface schema of the search server 52 and the attribute in the global query interface schema of the other search server 53, the search request represented by the global query interface schema of the search server 52 is converted into the search request represented by the global query interface schema of the other search server 53 and the search request represented by the global query interface schema of the other search server 53 is sent to the other search server 53.

In the end, according to the global search result interface schema, the local search result interface schema, and the mapping relationship between the attribute in the global search result interface schema and the attribute in each local search result interface schema, the search result represented by each local search result interface schema is converted and combined into the search result represented by the global search result interface schema and the search result represented by the global search result interface schema is returned to the search client 51, or according to the global search result interface schema of the search server 52, the global search result interface schema of the other search server 53, and the mapping relationship between the attribute in the global search result interface schema of the search server 52 and the attribute in the global search result interface schema of the other search server 53, the search result represented by the global search result interface schema of the other search server 53 is converted into the search result represented by the global search result interface schema of the search server 52 and the search result represented by the global search result interface schema of the search server 52 is returned to the search client 51.

The member engine 53\54 includes a common vertical search member engine 54 and a search server 53 connected to other next-level member engines. The common vertical search member engine 54 is configured to report the local query and search result interface schemas and the mapping relationship between the attribute in the global interface schema and the attribute in the local interface schema, receive a search request, and return a search result. The other search server 53 connected to other next-level member engines is configured to report the global query and search result interface schemas of the other search server 53 and the mapping relationship between the attribute in the global interface schema of the search server 52 and the attribute in the global interface schema of the other search server 53, receive a search request, and return a search result.

FIG. 6 is a schematic structure diagram of detailed module devices for query and search result interfaces adaptation for mobile search according to an embodiment of the present invention.

The search server includes a local interface schema and local-attribute-and-global-attribute mapping relationship receiving module 601 (corresponding to the receiving module in FIG. 3 and FIG**.** 4), a query interface adaptation module 602 (corresponding to the conversion module and the sending module in FIG. 3), and a search result interface adaptation module 603 (corresponding to the conversion module and the sending module in FIG. 4).

The local interface schema and local-attribute-and-global-attribute mapping relationship receiving module 601 is configured to receive and store local query and search result interface schemas (which refer to a local query interface schema and a search result interface schema, the same hereinafter) and mapping relationships between an attribute in a global interface schema and attributes in the local interface schemas (which refers to a mapping relationship between an attribute in a global query interface schema and an attribute in a local query interface schema and a mapping relationship between an attribute in a global search result interface schema and an attribute in a local search result interface schema, the same hereinafter) reported by a member engine, where alternatively, the mapping relationships between the attribute in the global interface schema and the attributes in the local interface schemas are generated and stored by the module of the search server; or receive and store global query and search result interface schemas of the other search server and mapping relationships between the attribute in the global interface schema of the search server and the attributes in the global interface schemas of the other search server reported by the other search server, where alternatively, the mapping relationships between the attribute in the global interface schema of the search server and the attributes in the global interface schemas of the other search server are generated and stored by the module of the search server.

The query interface adaptation module 602 is configured to, according to the global query interface schema, the local query interface schema, and the mapping relationship between the attribute in the global query interface schema and the attribute in each local query interface schema, convert a search request represented in the form of the global query interface schema sent by a search client into a search request represented by the local query interface schema of each member engine, and send the search request represented by the local query interface schema of each member engine to each member engine; or according to the global query interface schema of the search server, the global query interface schema of the other search server, and the mapping relationship between the attribute in the global query interface schema of the search server and the attribute in the global query interface schema of the other search server, convert a search request represented by the global query interface schema of the search server into a search request represented by the global query interface schema of the other search server and send the search request represented by the global query interface schema of the other search server to the other search server.

The search result interface adaptation module 603 is configured to, according to the global search result interface schema, the local search result interface schema, and the mapping relationship between the attribute in the global search result interface schema and the attribute in each local search result interface schema, convert and combine a search result represented by each local search result interface schema into a search result represented by the global search result interface schema and return the search result represented by the global search result interface schema to the search client; or according to the global search result interface schema of the search server, the global search result interface schema of the other search server, and the mapping relationship between the attribute in the global search result interface schema of the search server and the attribute in the global search result interface schema of the other search server, convert a search result represented by the global search result interface schema of the other search server into a search result represented by the global search result interface schema of the search server and return the search result represented by the global search result interface schema of the search server to the search client.

The member engine includes a local interface schema and local-attribute-and-global-attribute mapping relationship sending module 604. When the member engine is a common vertical search engine, the local interface schema and local-attribute-and-global-attribute mapping relationship sending module is configured to report the local query and search result interface schemas and the mapping relationships between the attribute in the global interface schema and the attributes in the local interface schemas. When the member engine is the other search server connected to other next-level member engines, the local interface schema and local-attribute-and-global-attribute mapping relationship sending module is configured to report the global query and search result interface schemas of the other search server and the mapping relationships between the attribute in the global interface schema of the search server and the attributes in the global interface schemas of the other search server.

The technical solutions of the device of present invention have the following beneficial effects. As a technical means of mapping relationship conversion is adopted for the search request or search result represented by the global search result interface schema or the local search result interface schema, technical effects of greatly simplifying the process of the search interface adaptation of the search server and improving efficiency and accuracy of mobile search are achieved.

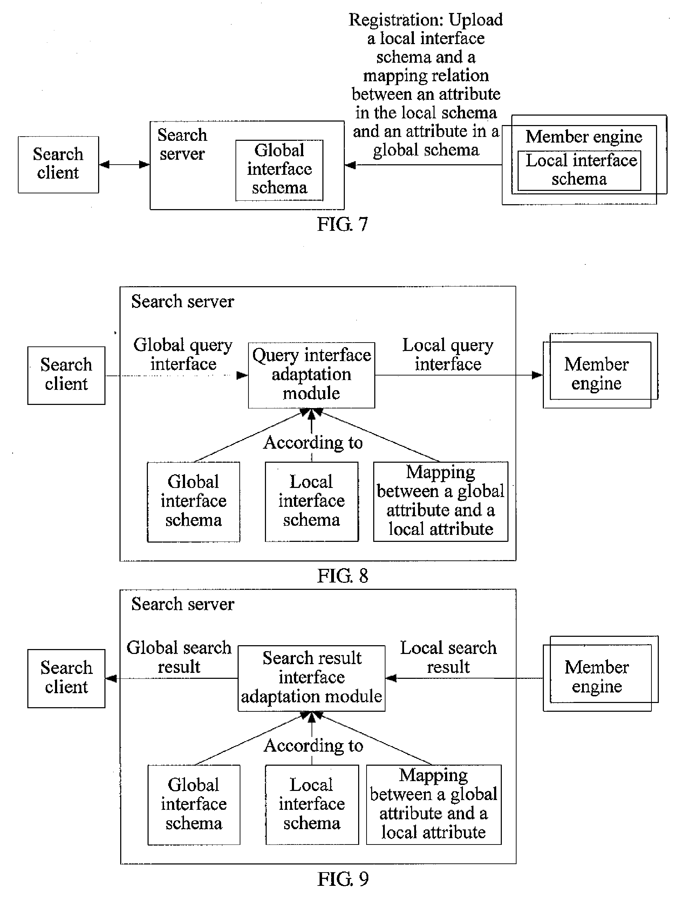

FIG. 7 is a schematic diagram of registration for mobile search in an application example of the present invention.

(1) Interface schema (including a query interface schema and a returned result interface schema).
A global interface schema is prestored in a search server; and
a local interface schema is stored in a member engine.

(2) Registration of Member Engine

(a) Upload a local interface (including query and search result interfaces) schema.

For example, a local interface schema for a certain member engine for searching articles is as follows:
T (an attribute name): a text type field, representing an article title, label: t
A (an attribute name): a text type field, representing an author, label: a
D (an attribute name): a text type field, representing a digest, label: d
P (an attribute name): a date type, representing a publication date, label: p
F (an attribute name): a text type field, representing a full text, label: f

(b) Upload a mapping relationship between an attribute in a local schema and an attribute in a global schema or the mapping relationship is generated by a search server.

For example, a global interface (including query and search result interfaces) schema for searching articles is as follows:
Title (an attribute name): a text type field, representing an article title, label: ti
Author (an attribute name): a text type field, representing an author, label: au
Digest (an attribute name): a text type field, representing a digest, label: di
Publication_date (an attribute name): a date type, representing a publication date, label: pd
Full_text (an attribute name): a text type field, representing a full text, label: ft
Claim (attribute name): a text type field, representing claims, label: cl

The mapping relationship between the attribute in the local interface (including query and search result interfaces) schema and the attribute in the global interface (including the search result interface) schema is as follows:
T-Title,
A-Author,
D-Digest,
P-Publication date,
F-Full_text.

FIG. 8 is a schematic diagram of query interface adaptation for mobile search in an application example of the present invention.

(1) A search client sends a search request represented by a global query interface schema to a search server.

(2) The search server converts the search request represented by the global query interface schema into a search request represented by each local query interface schema according to a global query interface schema, a local query interface schema, and a mapping relationship between an attribute in the global query interface schema and an attribute in each local query interface schema.

For example, a search request represented by a global query interface schema is as follows:
Search (di: "search interface adaptation", pd: 2008)

According to the global query interface schema, a certain local query interface schema, and the mapping relationship between the attribute in the certain local schema and the attribute in the global schema given in the foregoing, the search request represented by the global query interface schema is converted into a search request represented by the certain local query interface schema:
Search (d: "search interface adaptation", p: 2008)

The conversion process is as follows:

The global query interface schema is searched according to a label (di and pd) in the Search (di, "search interface adaptation", pd: 2008) to find that a global attribute name corresponding to di is Digest, and a global attribute name corresponding to pd is Publication_date; it is then found according to the mapping relationship between the attribute in the local query interface schema and the attribute in the global query interface schema that the global attribute Digest is mapped to the local attribute D and the global attribute Publication_date is mapped to the local attribute P; and it is found according to the local query interface schema that the label corresponding to the local attribute D is d, and the label corresponding to the local attribute P is p, so Search (di, "search interface adaptation", pd: 2008) is converted into Search (d, "search interface adaptation", p:2008).

(3) When an attribute in a certain corresponding local query interface schema is not found to be mapped to the attribute in the search request represented by the global query interface schema, an input keyword corresponding to the attribute in the search request represented by the global query interface schema is expanded into a certain general search attribute (for example, an attribute corresponding to a general search box) in the local query interface schema.

For example, a search request represented by the global query interface schema is as follows:
Search (cl: "search interface adaptation", pd: 2008)

At this time, a corresponding local attribute is not found to be mapped to a global attribute Claims corresponding to a global label cl according to the global query interface schema, the certain local query interface schema, and the mapping relationship between the attribute in the certain local schema and the attribute in the global schema, so the input keyword "search interface adaptation" corresponding to the global claims attribute is expanded into a certain general search attribute of the local query interface schema, and in this example, the local generic attribute is F (full text), and the corresponding label is f. Therefore, the search request represented by the global query interface schema is converted into the search request represented by the certain local query interface schema:
Search (f: "search interface adaptation", pd: 2008)

(4) The search request represented by each local query interface schema is distributed to each member search engine.

FIG. 9 is a schematic diagram of search result interface adaptation for mobile search in an application example of the present invention.

(1) Each member engine sends each local search result to a search server.

(2) The search server converts and combines each local search result into a global search result according to a global search result interface schema, a local search result interface schema, and a mapping relationship between an attribute in the global search result interface schema and an attribute in each local search result interface schema.

For example, a search result represented by a certain local search result interface schema is as follows:
Result (t: "A meta-search interface adaptation method", a: "Mr. Hu", d: "digest...", p: 2008-12-28, f: "text...")

According to the global search result interface schema, the certain local search result interface schema, the mapping relationship between the attribute in the certain local search result interface schema and the attribute in the global search result interface schema given in the foregoing, the search result represented by the certain local search result interface schema is converted into a search result represented by the global search result interface schema:
Result (ti: "meta-search interface adaptation method", au: "Mr. Hu", di: "digest...", pd: 2008-12-28, ft: "text...")

The conversion process is as follows:

The local search result interface schema is searched according to labels (t, a, d, and p) in Result (t: "meta-search interface adaptation method", a: "Mr. Hu", d: "digest...", p: 2008-12-28, f: "text...") to find that a local attribute name corresponding to t is T, a local attribute name corresponding to a is A, a local attribute name corresponding to d is D, a local attribute name corresponding to p is P, and a local attribute name corresponding to f is F; it is then found according to the mapping relationship between the attribute in the local search result interface schema and the attribute in the global search result interface schema that the global attribute Title is mapped to the local attribute T, the global attribute Author is mapped to the local attribute A, the global attribute Digest is mapped to the local attribute D, the global attribute Publication_date is mapped to the local attribute P, and the global attribute Full_text is mapped to the local attribute F; and it is then found according to the global search result interface schema that the label corresponding to the global attribute Title is ti, the label corresponding to the global attribute Author is au, the label corresponding to the global attribute Digest is di, the label corresponding to the global attribute Publication_date is pd, and the label corresponding to the global attribute Full_text is ft, so Result (t: "meta-search interface adaptation method", a: "Mr. Hu", d: "digest...", p: 2008-12-28, f: "text...") is converted into Result (ti: "meta-search interface adaptation method", au: "Mr. Hu", di: "digest...", pd: 2008-12-28, ft: "text...").

(3) The global search result is returned to a search client.

The application example of the present invention achieves the technical effects of greatly simplifying the process of the search interface adaptation of the search server and improving efficiency and accuracy of mobile search.

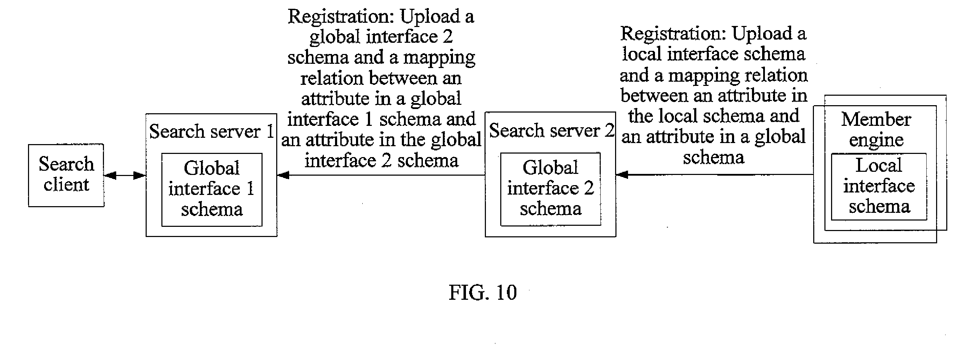

FIG. 10 is a schematic diagram of registration for mobile search in another application example of the present invention.

(1) Interface schema (including a query interface schema and a returned result interface schema).
A schema of a global interface 1 is prestored in a search server 1;
a schema of a global interface 2 is prestored in a search server 2; and
a local interface schema is stored in a member engine.

(2) Registration of the member engine.
Upload the local interface schema; and
a mapping relationship between an attribute in the local interface schema and an attribute in the global interface 2 schema is uploaded or the mapping relationship is generated by the search server 2.

The two steps are performed separately or synchronously, and the application example of the present invention is not limited thereto.

(3) Registration of the search server 2.
Upload the global interface 2 schema; and
a mapping relationship between an attribute in the global interface 2 schema and an attribute in the global interface 1 schema is uploaded or the mapping relationship is generated by the search server 1.

The two steps are performed separately or synchronously, and the application example of the present invention is not limited thereto.

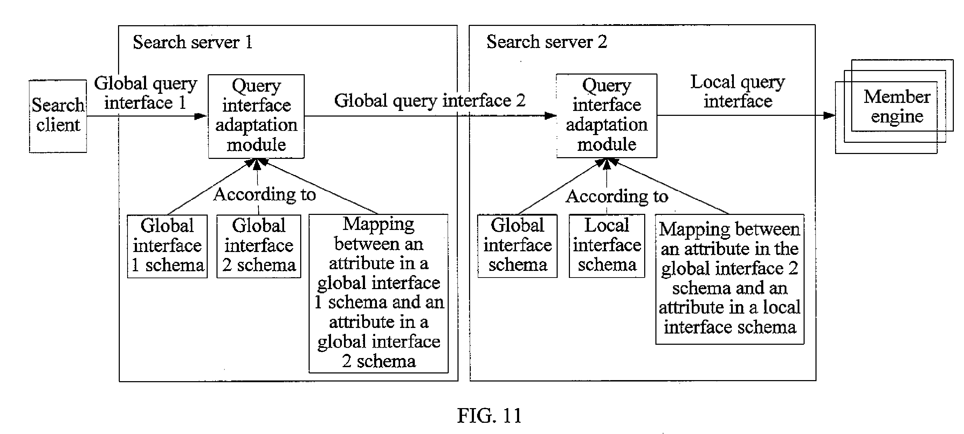

FIG. 11 is a schematic diagram of query interface adaptation for mobile search in another application example of the present invention.

(1) A search client sends a search request represented by a global query interface 1 schema to a search server 1.

(2) The search server 1 converts the search request represented by the global query interface 1 schema into a search request represented by the global query interface 2 schema according to the global query interface 1 schema, the global query interface 2 schema, and a mapping relationship between an attribute in the global query interface 1 schema and an attribute in the global query interface 2 schema.

(3) When the corresponding attribute in the global query interface 2 schema is not found to be mapped to the attribute in the search request represented by the global query interface 1 schema an input keyword corresponding to the attribute in the search request represented by the global query interface 1 schema is expanded into a certain general search attribute (for example, an attribute corresponding to a general search box) in the global query interface 2 schema.

(4) The search server 1 forwards the search request represented by the global query interface 2 schema to a search server 2.

(5) The search server 2 converts the search request represented by the global query interface 2 schema into a search request represented by each local query interface schema according to the global query interface 2 schema, the local query interface schema, and a mapping relationship between an attribute in the global query interface 2 schema and an attribute in each local query interface schema.

(6) When an attribute in a certain corresponding local query interface schema is not found to be mapped to the attribute in search request represented by the global query interface 2 schema, an input keyword corresponding to the attribute in the search request represented by the global query interface 2 schema is expanded into a certain general search attribute (for example, an attribute corresponding to a general search box) in the local query interface schema.

(7) The search request represented by each local query interface schema is distributed to each member search engine.

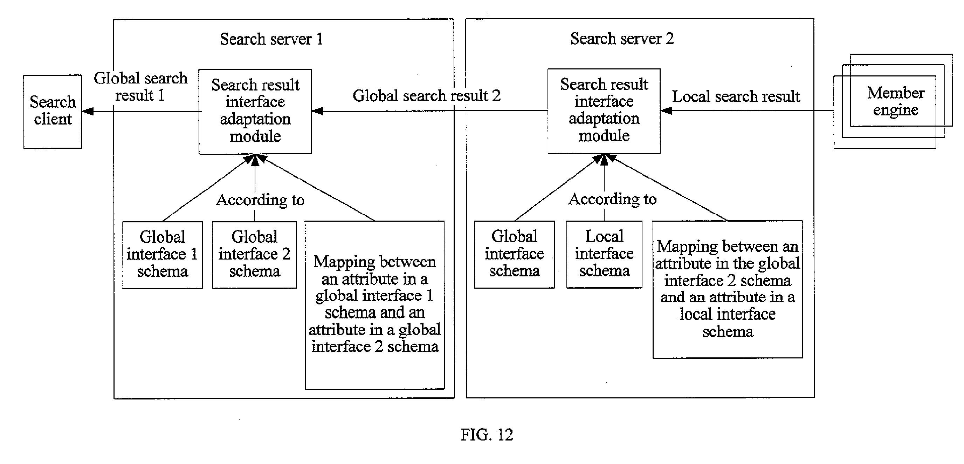

FIG. 12 is a schematic diagram of search result interface adaptation for mobile search in another application example of the present invention.

(1) Each member engine sends each local search result to a search server 2.

(2) The search server 2 converts and combines each local search result into a search result represented by a global search result interface 2 schema according to the global search result interface 2 schema, a local search result interface schema, and a mapping relationship between an attribute in the global search result interface 2 schema and an attribute in each local search result interface schema.

(3) The search result represented by the global search result interface 2 schema is returned to a search server 1.

(4) The search server 1 converts the search result represented by the global search result interface 2 schema into a search result represented by a global search result interface 1 schema according to the global search result interface 1 schema, the global search result interface 2 schema, and a mapping relationship between an attribute in the global search result interface schema 1 and an attribute in the global search result interface 2 schema.

(5) The search result represented by the global search result interface 1 schema is returned to a search client.

The application example of the present invention achieves the technical effects of greatly simplifying the process of the search interface adaptation of the search server and improving efficiency and accuracy of mobile search.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be such as a read-only memory (ROM)/random access memory (RAM), a magnetic disk, and an optical disk.

The objectives, technical solutions, and beneficial effects of the present invention have been described in further detail through the above specific implementation. It should be understood that the above descriptions are merely specific implementation of the present invention, but not intended to limit the present invention. Any modification, equivalent replacement or improvement made without departing from the spirit and principle of the present invention should fall within the protection scope of the present invention.

## Claims

1. A method for query interface adaptation for mobile search, comprising:
receiving a search request represented by a global query interface schema;
according to a mapping relationship between an attribute in the global query interface schema and an attribute in a local query interface schema of each member engine, converting the search request represented by the global query interface schema into a search request represented by the local query interface schema of each member engine; and
distributing the search request represented by the local query interface schema of each member engine to each member search engine.

2. The method according to claim 1, wherein before the receiving the search request, the method comprises:
receiving the local query interface schema of each member engine sent by each member engine.

3. The method according to claim 2, wherein
the mapping relationship between the attribute in the global query interface schema and the attribute in the local query interface schema of each member engine is reported by each member engine or generated by a search server according to the global query interface schema and the local query interface schema of each member engine.

4. The method according to claim 2, wherein the converting the search request represented by the global query interface schema into the search request represented by the local query interface schema of each member engine according to the mapping relationship between the attribute in the global query interface schema and the attribute in the local query interface schema of each member engine comprises:
according to the global query interface schema, the local query interface schema of each member engine, and the mapping relationship between the attribute in the global query interface schema and the attribute in the local query interface schema of each member engine, converting the search request represented by the global query interface schema into the search request represented by the local query interface schema of each member engine; and
when an attribute in a certain corresponding local query interface schema is not found to be mapped to an attribute in the search request represented by the global query interface schema, expanding an input keyword corresponding to the attribute in the search request represented by the global query interface schema into a generic attribute in the local query interface schema.

5. The method according to any one of claims 1 to 4, wherein
the member engine comprises a vertical search engine and/or a search server connected to a next-level member engine.

6. The method according to any one of claims 1 to 4, wherein
a structure of the search request comprises: a search command, a label corresponding to the attribute in the global query interface schema, a label corresponding to the attribute in the local query interface schema of each member engine, and search content.

7. A method for search result interface adaptation for mobile search, comprising:
receiving a search result sent by each member engine, wherein the search result is represented by a local search result interface schema of each member engine;
according to a mapping relationship between an attribute in a global search result interface schema and an attribute in the local search result interface schema of each member engine, converting and combining the search result represented by the local search result interface schema of each member engine into a search result represented by the global search result interface schema; and
returning the search result represented by the global search result interface schema to a client sending a search request or another search server.

8. The method according to claim 7, wherein before the receiving the search result sent by each member engine, the method comprises:
receiving the local search result interface schema of each member engine sent by each member engine.

9. The method according to claim 8, wherein
the mapping relationship between the attribute in the global search result interface schema and the attribute in the local search result interface schema of each member engine is reported by each member engine or generated by a search server according to the global search result interface schema and the local search result interface schema of each member engine.

10. The method according to any one of claims 7 to 9, wherein
the member engine comprises a vertical search engine and/or a search server connected to a next-level member engine.

11. The method according to claim 8, wherein the converting and combining the search result represented by the local search result interface schema of each member engine into the search result represented by the global search result interface schema according to the mapping relationship between the attribute in the global search result interface schema and the attribute in the local search result interface schema of each member engine comprises:
according to the global search result interface schema, the local search result interface schema of each member engine, and the mapping relationship between the attribute in the global search result interface schema and the attribute in the local search result interface schema of each member engine, converting and combining the search result represented by the local search result interface schema of each member engine into the search result represented by the global search result interface schema.

12. A search server for query interface adaptation for mobile search, comprising:
a receiving unit, configured to receive a search request represented by a global query interface schema;
a conversion unit, configured to, according to a mapping relationship between an attribute in the global query interface schema and an attribute in a local query interface schema of each member engine, convert the search request represented by the global query interface schema into a search request represented by the local query interface schema of each member engine; and
a sending unit, configured to distribute the search request represented by the local query interface schema of each member engine to each member search engine.

13. The search server according to claim 12, wherein before receiving the search request, the receiving unit is configured to receive the local query interface schema of each member engine sent by each member engine.

14. The search server according to claim 13, wherein
the mapping relationship between the attribute in the global query interface schema and the attribute in the local query interface schema of each member engine is reported by each member engine or generated by the search server according to the global query interface schema and the local query interface schema of each member engine.

15. The search server according to claim 13, wherein the conversion unit is further configured to, according to the global query interface schema, the local query interface schema of each member engine, and the mapping relationship between the attribute in the global query interface schema and the attribute in the local query interface schema of each member engine, convert the search request represented by the global query interface schema into the search request represented by the local query interface schema of each member engine; and
when an attribute in a certain corresponding local query interface schema is not found to be mapped to an attribute in the search request represented by the global query interface schema, expand an input keyword corresponding to the attribute in the search request represented by the global query interface schema into a generic attribute in the local query interface schema.

16. The search server according to any one of claims 12 to 15, wherein
the member engine comprises a vertical search engine and/or a search server connected to a next-level member engine.

17. The search server according to any one of claims 12 to 15, wherein
a structure of the search request comprises: a search command, a label corresponding to the attribute in the global query interface schema, a label corresponding to the attribute in the local query interface schema of each member engine, and search content.

18. A system for query interface adaptation for mobile search, comprising a member engine and the search server for query interface adaptation for mobile search according to any one of claims 12 to 17.

19. A search server for search result interface adaptation for mobile search, comprising:
a receiving unit, configured to receive a search result sent by each member engine, where the search result is represented by a local search result interface schema of each member engine;
a conversion unit, configured to, according to a mapping relationship between an attribute in a global search result interface schema and an attribute in the local search result interface schema of each member engine, convert and combine the search result represented by the local search result interface schema of each member engine into a search result represented by the global search result interface schema; and
a sending unit, configured to return the search result represented by the global search result interface schema to a client or another search server sending a search request.

20. The search server according to claim 19, wherein before receiving the search request, the receiving unit is configured to receive the local search result interface schema of each member engine sent by each member engine.

21. The search server according to claim 20, wherein
the mapping relationship between the attribute in the global search result interface schema and the attribute in the local search result interface schema of each member engine is reported by each member engine or generated by the search server according to the global search result interface schema and the local search result interface schema of each member engine.

22. The search server according to any one of claims 19 to 21, wherein the member engine comprises a vertical search engine and/or a search server connected to a next-level member engine.

23. The search server according to claim 20, wherein the conversion unit is further configured to, according to the global search result interface schema, the local search result interface schema of each member engine, and the mapping relationship between the attribute in the global search result interface schema and the attribute in the local search result interface schema of each member engine, convert and combine the search result represented by the local search result interface schema of each member engine into the search result represented by the global search result interface schema.

24. A system for search result interface adaptation for mobile search, comprising a member engine and the search server for search result interface adaptation for mobile search according to any one of claims 19 to 23.
